# EUROPÄISCHE PATENTSCHRIFT

(11) **EP 3 248 336 B1**
(45) Veröffentlichungstag und Bekanntmachung des Hinweises auf die Patenterteilung: **06.01.2021**
(21) Anmeldenummer: 16702352.2
(22) Anmeldetag: 21.01.2016
(51) Int. Cl.: H04L 12/40, H02J 3/38, H04L 12/46, F03D 7/04

(54) **WINDENERGIEANLAGE UND VERFAHREN ZUM KOMMUNIZIEREN**
WIND TURBINE AND METHOD FOR COMMUNICATION
ÉOLIENNE ET PROCÉDÉ DE COMMUNICATION

(30) Priorität: 22.01.2015 DE 102015201019
(43) Veröffentlichungstag der Anmeldung: 29.11.2017
(73) Patentinhaber: Wobben Properties GmbH, 26607 Aurich (DE)
(72) Erfinder: FISCHER, Steffen, 26529 Upgant-Schott (DE); RICHTER, Stefan, 26725 Emden (DE)
(74) Vertreter: Eisenführ Speiser
(86) Internationale Anmeldenummer: PCT/EP2016/051212
(87) Internationale Veröffentlichungsnummer: WO 2016/116553

(56) Entgegenhaltungen:
- EP-A1- 0 792 048
- WO-A1-2015/079176
- CN-U- 203 704 983
- JP-A- H09 233 114
- JP-A- 2011 135 521
- US-A1- 2003 151 259
- US-A1- 2008 107 029
- US-A1- 2011 049 887
- US-A1- 2011 150 497
- US-A1- 2012 193 917
- US-A1- 2014 054 892
- US-A1- 2014 133 350
- US-A1- 2014 229 519
- US-A1- 2016 377 059
- US-B1- 6 654 355
- LAIFENFELD MOSHE ET AL: "Wireless controller area network for in-vehicle communication", 2014 IEEE 28TH CONVENTION OF ELECTRICAL & ELECTRONICS ENGINEERS IN ISRAEL (IEEEI), IEEE, 3. Dezember 2014 (2014-12-03), Seiten 1-5, XP032719174, DOI: 10.1109/EEEI.2014.7005751 [gefunden am 2015-01-09]
- PULGAR TONY FLORES ET AL: "Extending CAN over the air: An interconnection study with IEEE802.11", 2013 IEEE 18TH CONFERENCE ON EMERGING TECHNOLOGIES & FACTORY AUTOMATION (ETFA), IEEE, 10. September 2013 (2013-09-10), Seiten 1-8, XP032517022, ISSN: 1946-0740, DOI: 10.1109/ETFA.2013.6648051 [gefunden am 2013-10-24]
- WEI LUN NG ET AL: "Performance Analysis of Wireless Control Area Network (WCAN) Using Token Frame Scheme", INTELLIGENT SYSTEMS, MODELLING AND SIMULATION (ISMS), 2012 THIRD INTERNATIONAL CONFERENCE ON, IEEE, 8. Februar 2012 (2012-02-08), Seiten 695-699, XP032138018, DOI: 10.1109/ISMS.2012.74 ISBN: 978-1-4673-0886-1
- BAYILMIS ET AL: "A CAN/IEEE 802.11b wireless Lan local bridge design", COMPUTER STANDARDS AND INTERFACES, ELSEVIER SEQUOIA. LAUSANNE, CH, Bd. 30, Nr. 3, 5. Januar 2008 (2008-01-05) , Seiten 200-212, XP022411036, ISSN: 0920-5489, DOI: 10.1016/J.CSI.2007.08.011

## Beschreibung

Die vorliegende Erfindung betrifft eine Windenergieanlage und ein Windenergieanlagen-Kommunikationssystem.

Eine Windenergieanlage weist eine Vielzahl von elektrischen und elektronischen Komponenten auf, welche miteinander kommunizieren müssen. Diese Kommunikation kann z. B. durch das Vorsehen eines Datenbusses verbessert werden, wobei die jeweiligen elektrischen oder elektronischen Komponenten mit dem Datenbus zur Datenkommunikation verbunden sind.

Ein derartiger Datenbus kann ein (Controller Area Network) CAN-Bus darstellen, der für den Einsatz im Automobilbereich, d. h. für kürzere Entfernungen, entwickelt wurde. Daher muss der CAN-Bus für einen Einsatz in einer Windenergieanlage angepasst werden. Der CAN-Bus ist als ISO 11898 international standardisiert. In der ISO 11898 werden Mechanismen für die Regelung der Busbelegung (Arbitrierung) und der Übertragungsreihenfolge (Priorisierung) festgelegt.

US 2012/0193917 A1 zeigt eine Windenergieanlage mit einem internen Kommunikationsbus, der als ein CAN-Bus implementiert ist.

In der prioritätsbegründenden deutschen Patentanmeldung wurden die folgenden Dokumente vom Deutschen Patent- und Markenamt genannt: DE 10 2007 011 835 A1; US 2014/0133350 A1; DE 101 00 343 A1 und DE 600 04 035 T2.

"Wireless Controller Area Network For In-Vehicle Communication", 3. Dezember 2014, Moshe Laifenfeld; Tal Philosof, zeigt einen Controller Area Network CAN in einem Fahrzeug.

"Extending CAN over the air: an interconnection study with IEEE802.11", Tony Flores Pulgar, XP032517022, beschreibt eine drahtlose Kommunikation in einem Controller Area Network.

"Performance Analysis of Wireless Control Area Network (WCAN) Using Token Frame Scheme", 8. Februar 2012, XP032138018, beschreibt eine drahtlose Kommunikation in einem Control Area Network CAN.

"A CAN / IEE 802.11b wireless LAN local bridge design", 5. Januar 2008, XP022411036, beschreibt eine drahtlose Kommunikation in einem Local Area Network CAN.

US 2012/193917 A1 beschreibt eine Pitchsteuerung mit einem CAN Bus.

CN 203704983 zeigt eine Windenergieanlage mit einem CAN Kommunikationsmodul.

US 2011/150497 A1 zeigt eine Windenergieanlage mit einer drahtlosen Infrarot-Datenübertragung.

US 2011/049887 A1 zeigt eine Windenergieanlage mit einem CAN Netzwerk.

US 2014/054892 A1 zeigt eine Windenergieanlage mit einem CAN Bus.

JP H09233114 A zeigt eine Multiprotokoll-Router-Bridge für industrielle Netzwerke.

EP 0 792 048 A1 zeigt eine Multiprotokoll-Router-Bridge.

US 6,654,355 beschreibt eine Schnittstelle zwischen einem CAN Bus und einer TCP/IP-Verbindung.

JP 2011135521 zeigt eine optische Kommunikationsvorrichtung, bei welcher eine CAN Kommunikation und eine optische Kommunikation nebeneinander vorhanden sein können.

US 2003/151259 A1 zeigt eine Windenergieanlage mit einem CAN Netzwerk.

US 2008/107029 beschreibt ein Netzwerk mit einer Mehrzahl von Knoten.

WO 2015/079176 beschreibt eine drahtlose Kommunikation zwischen einem sich drehenden Abschnitt und einem stillstehenden Abschnitt in einer Gondel einer Windenergieanlage.

Die Aufgabe der vorliegenden Erfindung besteht somit darin, eine Windenergieanlage vorzusehen, welche eine verbesserte Kommunikation der elektrischen oder elektronischen Komponenten innerhalb der Windenergieanlage ermöglicht.

Diese Aufgabe wird durch eine Windenergieanlage nach Anspruch 1 gelöst.

Gemäß der Erfindung wird eine Windenergieanlage mit mindestens einer ersten elektrischen und/oder elektronischen Komponente, mindestens einer zweiten elektrischen und/oder elektronischen Komponente und einem Controller Area Network CAN Kommunikationssystem zur Kommunikation zwischen der mindestens einen ersten und der mindestens einen zweiten elektrischen und/oder elektronischen Komponente vorgesehen. Das Controller Area Network CAN Kommunikationssystem weist mindestens einen ersten und zweiten CAN Knoten, mindestens eine erste und zweite CAN Verteileinheit, mindestens einen ersten Kommunikationsabschnitt zur Kommunikation zwischen dem mindestens einen ersten oder zweiten CAN Knoten und der mindestens einen ersten oder zweiten Verteileinheit und mindestens einen zweiten Kommunikationsabschnitt zur Kommunikation zwischen der mindestens einen ersten und zweiten CAN Verteileinheit auf. Die mindestens eine erste CAN Verteileinheit ist über den mindestens einen ersten Kommunikationsabschnitt mit dem mindestens einen ersten CAN Knoten und über den mindestens einen zweiten Kommunikationsabschnitt mit der mindestens einen zweiten Verteileinheit gekoppelt. Die mindestens eine zweite CAN Verteileinheit ist über den mindestens einen ersten Kommunikationsabschnitt mit dem mindestens einen zweiten CAN Knoten gekoppelt. Die mindestens eine erste elektrische und/oder elektronische Komponente ist mit dem mindestens einen ersten CAN Knoten gekoppelt. Die mindestens eine zweite elektrische und/oder elektronische Komponente ist mit dem mindestens einen zweiten CAN Knoten gekoppelt, um eine Kommunikation zwischen der mindestens einen ersten und zweiten elektrischen Komponente zu ermöglichen. Die mindestens eine erste und zweite CAN Verteileinheiten sind dazu ausgestaltet, über den mindestens einen ersten Kommunikationsabschnitt eine Datenkommunikation mit dem mindestens einen ersten oder dem mindestens einen zweiten CAN Knoten basierend auf einem ersten CAN Protokoll durchzuführen, welches ein Standard CAN Protokoll gemäß ISO 11898 darstellt. Die mindestens eine erste und zweite CAN Verteileinheit sind dazu ausgestaltet, untereinander über den mindestens einen zweiten Kommunikationsabschnitt eine Datenkommunikation basierend auf einem zweiten CAN Protokoll durchzuführen, welches von dem Standard CAN Protokoll abweicht. Der mindestens eine zweite Kommunikationsabschnitt ist als optische Leitung ausgestaltet. Der mindestens eine erste und der mindestens eine zweite Kommunikationsabschnitt sind jeweils als direkte Punkt-zu-Punkt Verbindung ausgestaltet.

Gemäß einem Aspekt der vorliegenden Erfindung erlaubt das zweite CAN Protokoll ein verspätet eintreffendes Acknowledge Signal. Dies wird gemäß der Erfindung dadurch ermöglicht, dass das erfindungsgemäße Kommunikationssystem eine Punkt-zu-Punkt Verbindung gewährleistet. Die CAN Verteileinheiten sind einerseits mit CAN Knoten und andererseits mit anderen CAN Verteileinheiten gekoppelt, welche wiederum mit CAN Knoten gekoppelt sind. Eine Kommunikation von einem ersten CAN Knoten zu einem zweiten CAN Knoten erfolgt somit von dem ersten CAN Knoten an eine erste CAN Verteileinheit, von dieser zu der zweiten CAN Verteileinheit und von der zweiten CAN Verteileinheit zu dem zweiten CAN Knoten. Durch diese Punkt-zu-Punkt Verbindungen kann gewährleistet werden, dass nicht mehrere CAN Knoten gleichzeitig auf die Verbindung zugreifen, wie es bei einem Bussystem erfolgen kann.

Gemäß der Erfindung ist die Verbindung zwischen einem CAN Knoten und einem CAN Verteilerknoten eine direkte Punkt-zu-Punkt Verbindung. Die Verbindung zwischen zwei CAN Verteilereinheiten, welche durch einen zweiten Kommunikationsabschnitt miteinander gekoppelt sind, ist ebenfalls eine Punkt-zu-Punkt Verbindung. Durch die Punkt-zu-Punkt Verbindungen können die erfindungsgemäßen Vorteile erreicht werden, insbesondere kann eine Kommunikation zwischen zwei CAN Knoten über eine größere Distanz ermöglicht werden. Das erfindungsgemäße Kommunikationssystem ist ferner vorteilhaft, weil jede Punkt-zu-Punkt Verbindung bzw. jeder Strang oder Abschnitt in dem Kommunikationssystem einzeln nachprüfbar ist, so dass auftretende Fehler sicher und genau lokalisiert werden können. Ferner kann gemäß der Erfindung die Baudrate der Datenkommunikation für jeden Kommunikationsstrang bzw. jede Punkt-zu-Punkt Verbindung separat eingestellt werden. Dadurch, dass die Knoten, welche mit den jeweiligen Elementen der Windenergieanlage gekoppelt sind, CAN Knoten darstellen, können standardisierte Module für die Kommunikation verwendet werden. Damit ist der Preis für derartige Kommunikationsmodule geringer als bei dedizierten Kommunikationsmodulen.

Die Verteileinheiten fungieren als eine Schnittstelle und können sowohl basierend auf einem ersten CAN Protokoll kommunizieren und andererseits basierend auf einem zweiten CAN Protokoll kommunizieren. Die Kommunikation mit den CAN Knoten kann basierend auf dem ersten CAN Protokoll erfolgen und die Kommunikation mit anderen Verteileinheiten kann über das zweite CAN Protokoll erfolgen. Das zweite CAN Protokoll erfolgt eine Datenkommunikation über größere Distanzen und bei einer höheren Geschwindigkeit als das erste CAN Protokoll. Das erste CAN Protokoll kann auf dem Standard CAN Protokoll gemäß ISO 11898 basieren.

Gemäß einem Aspekt der Erfindung kann der erste Kommunikationsabschnitt optional als CAN-Bus ausgestaltet sein.

Gemäß einem Aspekt der vorliegenden Erfindung wird der Kommunikationsbus bzw. das Kommunikationssystem in der Windenergieanlage als ein CAN-Kommunikationssystem implementiert und weiter an die Gegebenheiten einer Windenergieanlage angepasst. Hierbei muss beispielsweise berücksichtigt werden, dass der Turm der Windenergieanlage eine Höhe von über 100 m erreichen kann. Ferner kann auch beispielsweise die Länge der Rotorblätter der Windenergieanlage 50 m übersteigen. Bei dem erfindungsgemäßen Kommunikationssystem muss sichergestellt werden, dass eine Busarbitrierung und eine Übertragungsreihenfolge auch eingehalten werden kann.

Aufgrund der großen Ausdehnung der Windenergieanlage und der unterschiedlichen Anordnung der jeweiligen elektrischen oder elektronischen Einheiten, die an das CAN-Kommunikationssystem angeschlossen sind, kann es bei einem Mehrfachzugriff auf das CAN- Kommunikationssystem zu Situationen kommen, bei denen Error-Frames erzeugt werden. Dies kann durch ein ungünstiges Zusammenspiel zwischen der Signallaufzeit bei der großen Ausdehnung des CAN- Kommunikationssystemes sowie durch asynchrone Zugriffe mehrerer Teilnehmer auftreten. Dies kann insbesondere bei einer zufälligen Bündelung von Frames verschiedener Teilnehmer nach dem ersten Frame des Bündels auftreten. Je größer die Ausdehnung des Kommunikationssystems, desto mehr dieser Error-Frames können erzeugt werden. Die Anzahl der Error-Frames steigt ebenfalls mit größer werdender Auslastung des Kommunikationssystems.

Gemäß einem Aspekt der vorliegenden Erfindung wird eine Windenergieanlage mit einem Controller Area Network CAN-Kommunikationssystem vorgesehen. Das System unterteilt die Kommunikationsstrukturen des CAN- Kommunikationssystems in einzelne Punkt-zu-Punkt Verbindungen. Für kurze Kommunikationsabschnitte erfolgt die CAN-Kommunikation gemäß dem ISO 11898 Standard. Für lange Kommunikationsabschnitte wird ein Protokoll verwendet, welches von dem Standard ISO 11898 Protokoll abweicht. Dadurch, dass auf den langen Kommunikationsabschnitten eine lange Punkt-zu-Punkt Verbindung entsteht, kann eine einfache Anpassung des Standard CAN Protokolls (ISO 11898) erfolgen. Das adaptierte Protokoll ist auf jeder optischen Punkt-zu-Punkt Verbindung mit dem Standard Protokoll gemäß ISO 11898 abwärts kompatibel.

Der eine lange Abschnitt ist gemäß einem Aspekt der Erfindung optisch ausgeführt. Das adaptierte Protokoll weicht von dem Standard ISO 11898 Protokoll dahingehend ab, dass die beiden beteiligten CAN Verteilereinheiten ein verspätet eintreffendes Acknowledge Signal akzeptieren. Eine zulässige Verspätung ist vorher bestimmbar über die Laufzeit der von der Gegenstelle reflektierten CAN-Daten. Die explizite Reflexion der CAN-Daten ist bei der optischen Übertragung vorteilhaft, da hierbei im Gegensatz zur standardisierten elektrischen Verbindung keine Kopplung zwischen Sende- und Empfangsleitung besteht. Damit können alle an eine der CAN Verteilereinheiten optisch zugänglichen CAN Kommunikationsabschnitte als langer Abschnitt ausgestaltet sein, wenn die Gegenstelle die Protokollerweiterung unterstützt. Dies funktioniert jedoch nicht, wenn die Gegenstelle als ein klassischer CAN Knoten ausgestaltet ist.

Somit wird eine Windenergieanlage mit einem CAN Kommunikationssystem vorgesehen, welches eine Mehrzahl von CAN Knoten aufweist, die über das CAN Kommunikationssystem miteinander kommunizieren. Das CAN Kommunikationssystem weist eine Mehrzahl von CAN Verteilereinheiten auf, welche über einen ersten Kommunikationsabschnitt mit einem CAN Knoten und über einen zweiten Kommunikationsabschnitt mit weiteren CAN Verteilereinheiten gekoppelt sind. Über den ersten Kommunikationsabschnitt erfolgt eine Datenkommunikation basierend auf einem Standard CAN Protokoll. Über den zweiten Kommunikationsabschnitt erfolgt eine Datenkommunikation basierend auf einem von dem Standard CAN Protokoll abweichenden Protokoll.

Gemäß einem Aspekt der vorliegenden Erfindung ist die Länge des zweiten Kommunikationsabschnittes wesentliche größer als die Länge des ersten Kommunikationsabschnittes.

Gemäß einem weiteren Aspekt der vorliegenden Erfindung ist der zweite Kommunikationsabschnitt als optische Verbindung ausgestaltet, d. h. die Datenkommunikation über den zweiten Kommunikationsabschnitt erfolgt optisch.

Gemäß einem weiteren Aspekt der vorliegenden Erfindung erlaubt das zweite CAN Protokoll ein verspätet eintreffendes Acknowledge Signal. Die zulässige Verspätung kann über die Laufzeit der von einer Gegenstelle reflektierten CAN Daten ermittelt werden.

Gemäß der Erfindung wird ein CAN-Kommunikationssystem vorgesehen, welches eine virtuelle Verringerung der "Bus"-Ausdehnung ermöglicht, um größere Baudraten bei der Datenübertragung zu ermöglichen. Ferner werden "Bus"-Zugriffe entkoppelt, um Error-Frames zu vermeiden. Ferner kann die Auslastung der CAN-Knoten bzw. CAN-Anschlüsse optimiert werden. Optional kann eine Zulassung von individuellen Baudraten für jeden CAN-Knoten ermöglicht werden. Ein weiterer Vorteil ist die isolierte Fehlerbetrachtung der einzelnen Bussegmente. Bisher haben sich Verkabelungsfehler immer auf dem ganzen Bus bemerkbar gemacht, was die Fehlerdiagnose erschwert und die Verfügbarkeit verschlechtert hat.

Dazu kann erfindungsgemäß eine CAN-Verteilereinheit vorgesehen sein, welche eine automatische Erkennung der Baudrate des angeschlossenen CAN-Knotens, eine Decodierung des CAN-Frames, eine Erzeugung eines Acknowledge Signals, eine Encodierung des CAN-Frames sowie einn Empfangs- und Sendepuffer mit mindestens einer Frame Länge ermöglicht.

Die Erfindung betrifft eine Windenergieanlage mit einer Mehrzahl von elektrischen oder elektronischen Einheiten, die über ein CAN-Kommunikationssystem miteinander kommunizieren. Der CAN-Bus stellt einen seriellen Feldbus dar, welcher in ISO 11898 definiert ist.

Der erfindungsgemäße CAN-Bus kann gemäß einem Aspekt der Erfindung als ein Multimaster-Bus, bei dem jeder Teilnehmer selbständig nach einem festgelegten Mechanismus den Bus belegen darf. Die Übertragung erfolgt, soweit sie elektrisch erfolgt, über ein twisted pair-Kabel mit einem Wellenwiderstand von 95 bis 140 Ohm. Der Zugriff auf den Bus erfolgt durch eine Arbitrierung, welcher nach dem CSMA/CR-Verfahren (carrier sense multiple access/collision resolution) Verfahren arbeitet. Durch dieses Verfahren werden Mehrfachzugriffe oder potentielle Kollisionen durch einen Prioritätsmechanismus gelöst. Die Bit-Übertragungsgeschwindigkeit ist nicht fest definiert und kann von der Busausdehnung und den sich daraus resultierenden Signallaufzeiten bestimmt werden. Es kann eine Frameweise Empfangsbestätigung (acknowledge) innerhalb eines Bit-Fensters (acknowledgeslot) erfolgen. Die Datenübertragung auf dem CAN-Bus ist gemäß dem OSSI-Layer 1 und 2 (open system interconnection model) definiert. Aufgrund des erheblichen Potentialunterschieds zwischen CAN-Knoten in der Windenergieanlage, aufgrund der räumlichen Ausdehnung, starker Störfelder ist der CAN-Bus vorzugsweise im Wesentlichen als ein optischer CAN-Bus ausgestaltet. Aufgrund starker elektrischer und magnetischer Störfelder ist mit einer erhöhten Bit-Fehlerrate zu rechnen, soweit die Übertragung elektrisch erfolgt. Dazu kann eine Reduzierung der Bit-Übertragungsrate vorgesehen sein.

Weitere Ausgestaltungen sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage gemäß der Erfindung,
- Fig. 2: zeigt eine schematische Darstellung eines CAN-Busses in einer Windenergieanlage gemäß einem ersten Ausführungsbeispiel,
- Fig. 3: zeigt eine schematische Darstellung einer Systemarchitektur einer Windenergieanlage gemäß dem ersten Ausführungsbeispiel,
- Fig. 4: zeigt ein schematisches Blockschaltbild eines Ausschnitts eines CAN-Kommunikationssystems gemäß einem ersten Ausführungsbeispiel,
- Fig. 5: zeigt ein schematisches Blockschaltbild einer CAN-Verteilereinheit gemäß einem dritten Ausführungsbeispiel,
- Fig. 6: zeigt ein Blockschaltbild einer Baudaten- und Frame-Erkennung in einer CAN-Verteileinheit gemäß einem vierten Ausführungsbeispiel der Erfindung,
- Fig. 7: zeigt ein schematisches Blockschaltbild einer Frame-Erkennung in einer CAN-Verteileinheit gemäß einem vierten Ausführungsbeispiel,
- Fig. 8: zeigt ein schematisches Blockschaltbild einer Sendeeinheit in einer CAN-Verteileinheit gemäß dem vierten Ausführungsbeispiel,
- Fig. 9: zeigt ein Blockschaltbild einer Fehlererkennungseinheit in einer CAN-Verteileinheit gemäß dem vierten Ausführungsbeispiel, und
- Fig. 10: zeigt ein Blockschaltbild eines Teils einer CAN-Verteileinheit gemäß einem fünften Ausführungsbeispiel.

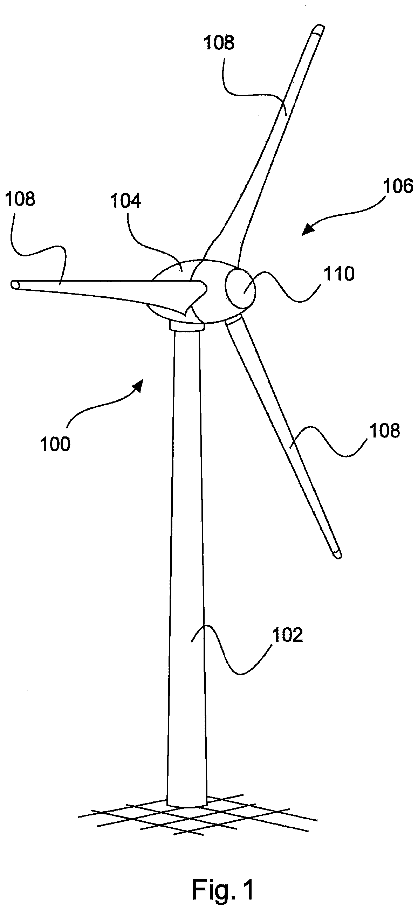

Fig. 1 zeigt eine schematische Darstellung einer Windenergieanlage gemäß der Erfindung. Die Windenergieanlage 100 weist einen Turm 102 und eine Gondel 104 auf dem Turm 102 auf. Der Turm 102 kann eine Mehrzahl von Turmsegmenten aufweisen, welche aufeinander platziert sind, um den Turm 102 auszubilden. An der Gondel 104 ist ein aerodynamischer Rotor 106 mit drei Rotorblättern 200 und einem Spinner 110 vorgesehen. Der aerodynmische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor gekoppelt ist. Der elektrische Generator ist in der Gondel 104 angeordnet und erzeugt elektrische Energie. Ein Pitchwinkel der Rotorblätter 200 kann durch Pitchmotoren an den Rotorblattwurzeln der jeweiligen Rotorblätter verändert werden.

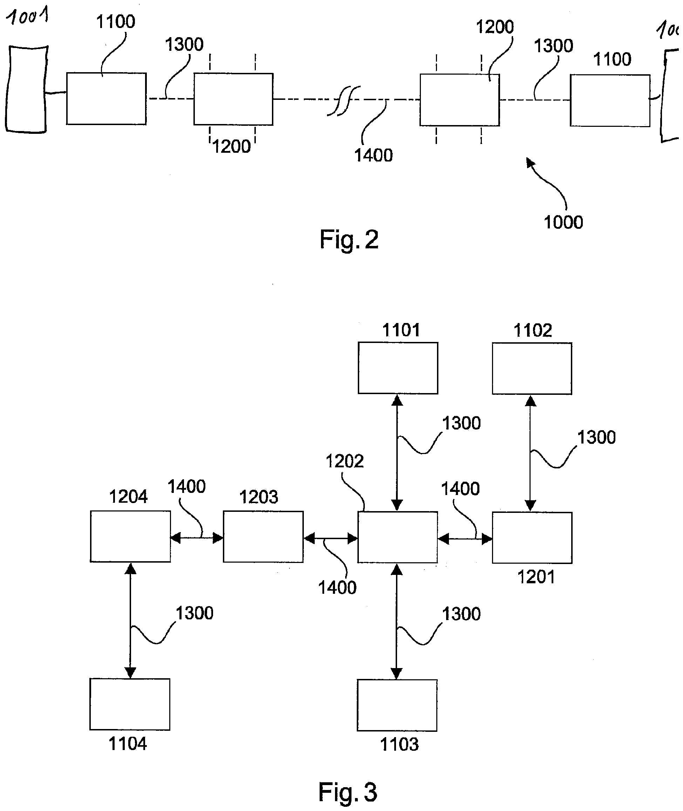

Fig. 2 zeigt eine schematische Darstellung eines CAN-Kommunikationssystemsin einer Windenergieanlage gemäß einem ersten Ausführungsbeispiel. Das Kommunikationssystem 1000 gemäß der Erfindung weist eine Mehrzahl von CAN-Knoten 1100 auf, welche über einen ersten Kommunikations-Abschnitt 1300 jeweils mit einer CAN-Verteileinheit 1200 gekoppelt sind. Die CAN Knoten können mit elektrischen oder elektronischen Komponenten 1001 der Windenergieanlage 100 gekoppelt werden. Die jeweiligen CAN-Verteileinheiten 1200 sind über einen zweiten Kommunikationsabschnitt 1400 gekoppelt. Der erste Kommunikationsabschnitt 1300 ist ein Kommunikationsabschnitt mit einer geringen Entfernung und kann als ein elektrischer oder optischer Kommunikationsabschnitt ausgestaltet sein. Auf dem ersten Kommunikationsabschnitt kann eine Kommunikation zwischen dem CAN-Knoten 1100 und der CAN-Verteileinheit 1200 über ein erstes CAN-Protokoll erfolgen. Das erste CAN-Protokoll kann das Standard-CAN-Protokoll gemäß ISO 11898 darstellen. Auf dem zweiten Kommunikationsabschnitt 1400, welcher vorzugsweise als eine optische Verbindung ausgestaltet ist, kann die Datenkommunikation gemäß einem zweiten CAN-Protokoll erfolgen, das nicht dem Standard-Protokoll entspricht, sondern einem abgewandelten Standard CAN Protokoll entspricht, um trotz der großen Ausdehnung eine erhöhte/hohe Datenübertragungsrate nutzen zu können.

Das erfindungsgemäße Kommunikationssystem überträgt Daten bei einer elektrischen Übertragung über das differenzielle Übertragungsverfahren zwischen den jeweiligen Teilnehmern. Hierbei wird in dem Halb-Duplexmodus gearbeitet werden, so dass auf der Leitung immer nur in eine Richtung gesendet werden kann. Bei einer optischen Übertragung erfolgt eine Übertragung über getrennte Sende- (Tx) und Empfangsleistungen (Rx). Der Sender überwacht den Bus, um gesendete Daten zu verifizieren und um zu erkennen, ob ein anderer Teilnehmer mit höherer Priorität einen Frame auf den Bus legt. Sobald ein Frame mit einer höheren Priorität auf dem Bus liegt, muss der senden wollende Teilnehmer seine Daten zurückhalten, und die Daten des anderen Teilnehmers mit dem höher priorisierten Frame entgegennehmen. Jeder der CAN-Knoten als Teilnehmer kann seine Daten so lange zurückhalten, bis der Bus frei ist und kein Teilnehmer einen Frame mit einer höheren Priorität auf den Bus legt. Dies gilt für die Kommunikation in dem ersten Kommunikationsabschnitt zwischen den CAN-Knoten und der CAN-Verteilereinheit. Der erste Kommunikationsabschnitt kann als CAN-Bus ausgestaltet sein.

Fig. 3 zeigt eine schematische Darstellung einer Systemarchitektur einer Windenergieanlage gemäß dem ersten Ausführungsbeispiel. In Fig. 3 ist eine CAN-Verteileinheit 1201 für einen Turm der Windenergieanlage, eine CAN-Verteileinheit 1202 für eine Gondel der Windenergieanlage, eine CAN-Verteileinheit 1203 als optischer Verteiler der Gondel der Windenergieanlage und eine CAN-Verteileinheit 1204 als optischer Verteiler für den Rotor der Windenergieanlage gezeigt. Zwischen den jeweiligen CAN-Verteileinheiten 1201 - 1204 erfolgt eine Kommunikation über den zweiten Kommunikationsabschnitt 1400 und damit gemäß einem zweiten CAN-Protokoll. An der CAN-Verteileinheit für den Turm 1201 kann über einen ersten Kommunikationsabschnitt 1300 eine Steuereinheit 1102 für den Turm gekoppelt sein. An die CAN-Verteileinheit 1202 für die Gondel kann eine Steuereinheit 1101 für die Gondel über einen ersten Kommunikationsabschnitt 1300 gekoppelt sein. An die CAN-Verteileinheit für die Gondel 1202 kann eine Gleichrichtersteuereinheit 1103 über einen ersten Kommunikationsabschnitt 1300 gekoppelt sein. Gemäß der Erfindung werden alle von den an das CAN-Kommunikationssystemangeschlossenen Einheiten gesendete Frames über eine der CAN-Verteileinheiten weitergeleitet. Somit sind die CAN-Verteileinheiten sowohl für die Kommunikation mit anderen CAN-Verteileinheiten als auch für die Kommunikation mit den direkt an der jeweiligen CAN-Verteileinheit angeschlossenen Steuereinheiten verantwortlich.

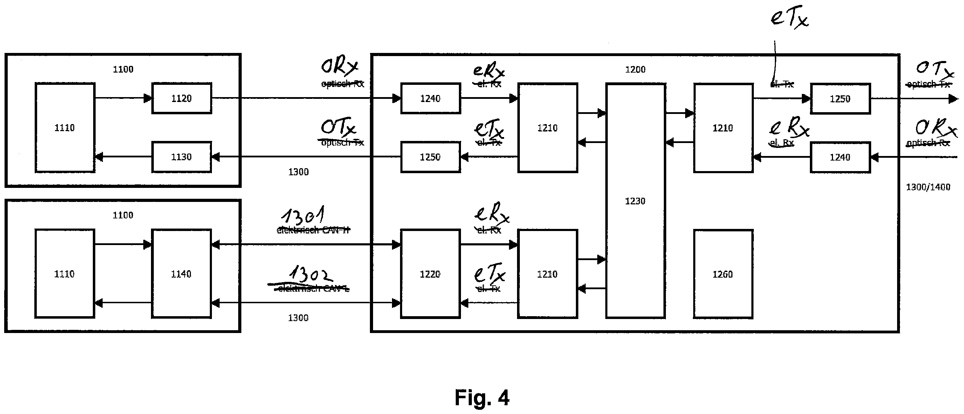

Fig. 4 zeigt ein schematisches Blockschaltbild eines Ausschnitts eines CAN-Kommunikationssystemsgemäß einem ersten Ausführungsbeispiel. Ein CAN-Knoten 1100 ist über einen ersten CAN-Kommunikationsabschnitt 1300 mit einer CAN-Verteileinheit 1200 gekoppelt. Der erste Kommunikationsabschnitt 1300 kann eine Sendeleitung Tx und eine Empfangsleitung Rx aufweisen. Der CAN-Knoten 1100 kann einen CAN-Knoten-Controller 1110, einen elektrischen Transceiver 1140 oder einen (optischen) Sender 1120 und einen (optischen) Empfänger 1130 aufweisen. Die CAN-Verteileinheit 1200 kann eine Schnittstelleneinheit 1210 z. B. mit einem elektrischen Transceiver 1220 oder mit einem (optischen) Empfänger 1240 und einem (optischen) Sender 1220 aufweisen. Ferner weist die CAN-Verteileinheit 1200 eine Schalteinheit 1230 sowie eine Fehlererkennungs- und Verarbeitungseinheit 1260 auf. Mit der erfindungsgemäßen CAN-Verteileinheit 1210, die als ein Eingangsstufe dienen kann, kann eine automatische Erkennung der Baudrate der angeschlossenen CAN-Knoten 1100, eine Decodierung der CAN-Frames, eine Erzeugung eines Acknowledge-Signals, eine Encodierung der CAN-Frames sowie ein Empfangs- und Sendepuffer mit mindestens einer Frame-Länge vorgesehen werden.

Der CAN Knoten 1100 kann einen CAN Knoten Controller 1110 sowie entweder einen elektrischen Transceiver 1140 oder alternativ einen optischen Sender 1120 und einen optischen Empfänger 1130 aufweisen. Der CAN Knoten 1100 kann somit entweder ein optisches Sende-/Empfangsmodul oder ein elektrisches Sende-/Empfangsmodul aufweisen. Der optische Sender 1120 und der optische Empfänger 1130 kommunizieren mit dem optischen Empfänger 1240 und dem optischen Sender 1220 der CAN Verteilereinheit 1200. Der elektrisch Transceiver 1140 des CAN Knotens 1100 kommuniziert über die elektrischen Leitungen 1301, 1302 mit dem elektrischen Transceiver 1220 in der CAN-Verteilereinheit 1200. Der optische Empfänger 1240 und der optische Sender 1250 kommunizieren über eine elektrische Empfangsleitung eRx und eine elektrische Sendeleitung eTx mit der Schnittstelleneinheit 1210.

Entsprechend kommuniziert der elektrische Transceiver 1220 über eine elektrische Empfangsleitung eRx und eine elektrische Sendeleitung eTx mit einer Schnittstelleneinheit 1210.

Gemäß einem Aspekt der vorliegenden Erfindung kann eine Kommunikation gemäß dem zweiten CAN Protokoll erfolgen, wenn auf der Gegenseite ebenfalls eine CAN Verteilereinheit vorgesehen ist, welche eine Kommunikation gemäß dem zweiten CAN Protokoll ermöglicht.

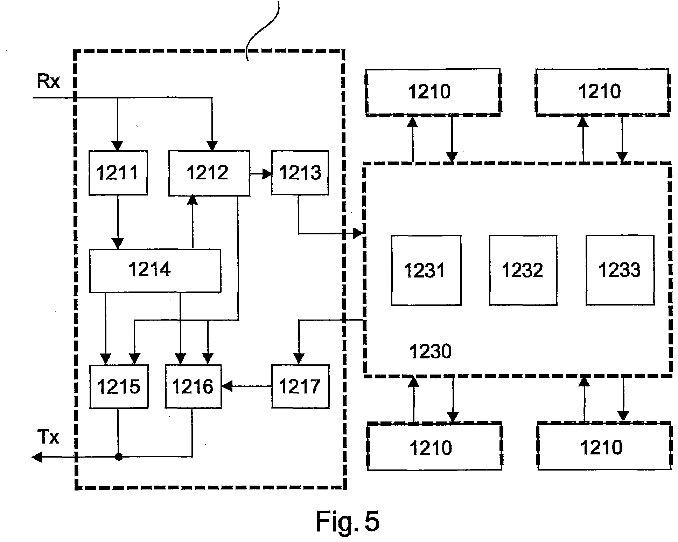

Fig. 5 zeigt ein schematisches Blockschaltbild einer CAN-Verteilereinheit gemäß einem dritten Ausführungsbeispiel. Gemäß der Erfindung kann der Sender und Empfänger am Ein- und/oder Ausgang der CAN-Verteileinheit 1200 auch in einer Schnittstelleneinheit 1210 integriert sein. Eine entsprechende Schnittstellen-Eingangseinheit 1210 kann einen Kantendetektor (edge detector) 1211, einen frame detector 1212, einen Sendepuffer 1213, einen Baudraten-Generator 1214, einen Acknowledge-Generator 1215, einen Frame-Encoder 1216 und einen Sendepuffer 1217 aufweisen. Die Schalteinheit 1230 kann eine Prioritätssteuereinheit 1231, eine Zustandssteuereinheit 1232 und eine Flusssteuereinheit 1233 aufweisen.

Die Schnittstelle 1210 kann eine Frame-Erkennungseinheit 1212, eine Baudraten-Erkennungseinheit 1214a, einen Baudraten-Generator 1214, eine Arbitrierungseinheit 1218 sowie einen Sendepuffer und eine Sendekontrolleinheit 1219 aufweisen. Gemäß einem Aspekt der Erfindung wird ein dezentraler Ansatz der Verwaltung der Schnittstellen vorgesehen. Die durch die Frame-Erkennungseinheit 1212 erkannten Eingangsframes werden direkt in den Sendepuffer 1219 kopiert. In dem Sendepuffer 1219 kann die Priorität der Frames ermittelt werden und sie können an die entsprechend angeschlossenen Teilnehmer übermittelt werden. Ein nachfolgend gesendetes Frame wird nur gesendet, wenn ein Acknowledgement-Signal übermittelt worden ist. Als Eingangspuffer reicht ein Puffer, in welchem ein vollständiger Frame aufgenommen werden kann. Dadurch, dass die empfangenen Frames direkt an den Sendepuffer weitergeleitet werden, kann die Eingangseinheit schneller arbeiten. In der Sendesteuereinheit 1219 kann ein Identifier in dem Frame gelesen werden, um die Priorität des Frames zu ermitteln.

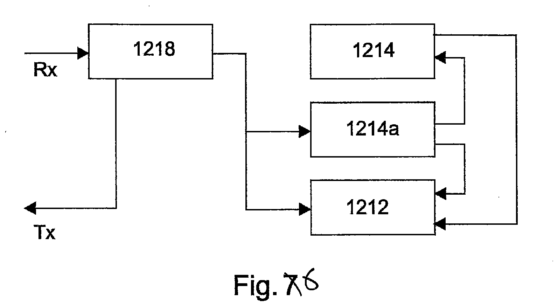

Fig. 6 zeigt ein Blockschaltbild einer Baudaten- und Frame-Erkennung in einer CAN-Verteileinheit gemäß einem zweiten Ausführungsbeispiel der Erfindung. In Fig. 6 ist nurdie Taktaufbereitung und Taktverteilung gezeigt. Der Datenfluss ist weitestgehend abstrahiert worden. Ein ankommendes Signal wird in der Baudraten-Erkennungseinheit 1214a analysiert. Basierend auf dem Analyseergebnis wird in dem Baudratengenerator 1214 ein neuer Takt synthetisiert. Eine Frame-Erkennungseinheit 1212 wird mit dem synthetisierten Takt gesteuert. Ein Eingangs-Frame wird der Arbitrierungseinheit 1218 zugeführt. In der Frame-Erkennungseinheit 1212 werden die Eingangsframes erkannt. Die Baudrate des Frames wird in der Baudratenerkennungseinheit 1214a ermittelt. In der Baudraten-Erkennungseinheit 1214a kann insbesondere die Baudrate auf dem zweiten Abschnitt des Busses, d. h. beispielsweise auf der optischen Verbindung, ermittelt werden. In dem Baudraten-Generator 1212 werden zwei Takte zur Abtastung der Empfangsleitung und der Sendeleitung erzeugt. Nachdem die Baudrate erkannt wurde und der Takt erzeugt worden ist, kann eine Aktivierung der Frame-Erkennungseinheit 1212 erfolgen, um anhand des Baudtaktes die Nutzdaten des Frames zu bestimmen.

Wenn der Frame erfolgreich erkannt worden ist, dann kann der Sender ein Acknowledgement-Signal übermitteln, um dem Frame als ein gültiges Frame zu markieren. Diese Informationen können dann an die angeschlossenen Teilnehmer weitergeleitet werden.

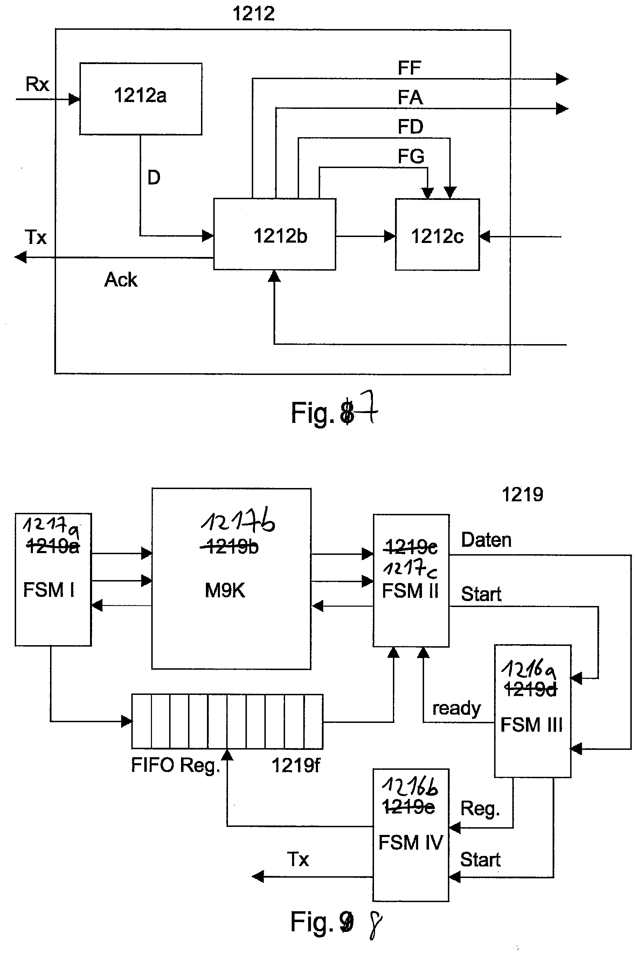

Fig. 7 zeigt ein schematisches Blockschaltbild einer Frame-Erkennung in einer CAN-Verteileinheit gemäß einem zweiten Ausführungsbeispiel. Die Frame-Erkennungseinheit 1212 weist einen Stuffbit-Filter 1212a, eine erste Zustandsmaschine 1212b und eine zweite Zustandsmaschine 1212c auf. Über die Eingangsleitung Rx werden die Frames empfangen und über eine Sendeleitung Tx kann ein Acknowledge-Signal Ack übermittelt werden, wenn ein Frame erfolgreich empfangen worden ist. Die Frame-Erkennungseinheit 1212 gemäß der Erfindung kann sowohl Frames gemäß CAN 2.0A als auch gemäß CAN 2.0B erkennen. Der Stuffbit-Filter 1212a wird für die sich in dem Datenstrom befindlichen Stuffbits vorgesehen. Durch das Entfernen dieser Stuffbits, bevor die Frame-Erkennung gestartet wird, kann die Frame-Erkennung einfacher ausgestaltet werden. Die Frame-Erkennungseinheit 1212 ist ferner dazu ausgestaltet, die erkannten Frames an weitere Anschlüsse weiter zu leiten. Dies erfolgt durch die zweite State Machine sowie einen internen Bus, der zwischen der Frame-Erkennungseinheit 1212 und dem Empfangspuffer 1213 vorgesehen ist. Die erste Zustandsmaschine 1212b kann als Ausgangssignal einen Frame-Fehler FE, ein aktives Frame FA, Frame-Daten FD und ein gültiges Frame FG aufweisen, welche von der ersten zu der zweiten Zustandsmaschine übermittelt werden. Die Ausgangssignale Frame-Fehler FF und Frame Aktiv FA können ausgegeben werden.

Fig. 8 zeigt ein schematisches Blockschaltbild einer Sendeeinheit in einer CAN-Verteileinheit gemäß dem dritten Ausführungsbeispiel. Der Zustandsautomat FSM I der Sendeeinheit 1219 empfängt die von der Schalteinheit 1230 verteilten Frames und kann die Frames entsprechend ihrer Priorität sortieren. Die empfangenen Frames können in dem Puffer 1217b zwischengespeichert werden. Der First-In-First-Out Speicher 1217d dient der Verwaltung der Frames im Speicher 1217b. Der Zustandsautomat FSM II 1217c prüft, welcher Frame die höchste Priorität aufweist und sendet denjenigen Frame mit der höchsten Priorität an den Ausgabe-Zustandsautomaten FSM III 1216a. Der Zustandsautomat FSM IV überwacht den Sendevorgang und löscht bei erfolgreichem Verlauf den Frame aus dem Puffer 1217d. Andernfalls kann der Sendevorgang wiederholt werden. Die Zustandsmaschine 1219a empfängt die Daten von der Frame-Erkennungseinheit 1212 und kann die Daten in dem Puffer 1219b zwischenspeichern. Eine weitere Zustandsmaschine 1219c ermittelt die Priorität der in dem Puffer 1219b gespeicherten Frames und liest die Frames mit der höchsten Priorität aus dem Puffer 1219b aus. Die Zustandsmaschine 1219d ist dafür zuständig, dass der aus dem Puffer extrahierte Frame gesendet wird.

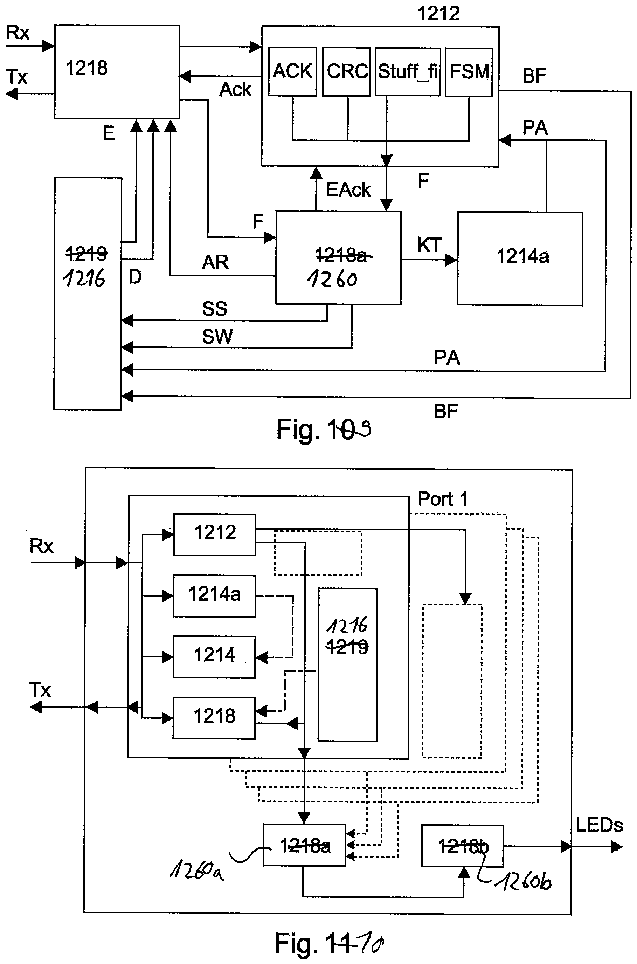

Fig. 9 zeigt ein Blockschaltbild einer Fehlererkennungseinheit in einer CAN-Verteileinheit gemäß dem vierten Ausführungsbeispiel. Nachfolgend soll insbesondere die Erkennung und Behandlung von Fehlern in der CAN-Verteileinheit erläutert werden. Die Arbitrierungseinheit 1218 empfängt Frames von der Empfangsleitung Rx. Diese Daten werden an die Frame-Erkennungseinheit 1212 weitergeleitet, welche ein Acknowledge-Signal Ack zurück an die Arbitrierungseinheit 1218 übermittelt. In der Frame-Erkennungseinheit 1212 werden die Frames erkannt und falls ein Fehler F vorliegt, wird dies an eine Fehlereinheit 1218a übermittelt. Die Fehlereinheit 1218a übermittelt dann ein Kein-Acknowledge-Signal kAcK an die Frame-Erkennungseinheit 1212, womit ein Senden eines Acknowledge-Signals Ack verhindert wird. Die Fehlereinheit 1218a übermittelt dann die Information "kein Teilnehmer" kT an die Baudratenerkennung, welche als Ausganssignal ein Port-Abschalten-Signal PA an die Frame-Erkennungseinheit 1212 und an die Sendeeinheit 1219 übermittelt. Die Fehlereinheit 1218k übermittelt ferner ein Sendestopp SS-Signal oder ein Senden Wiederholen-Signal SW. Als mögliche Fehler kommen Bit-Fehler, Stuffbit-Fehler, CRC-Fehler, Form-Fehler oder Acknowledgement-Fehler in Frage. Ein Bit-Fehler, der während der Arbitrierung auftritt, wird in der Arbitrierungseinheit 1218 erkannt und diese Information wird an die Fehlereinheit 1218a weitergeleitet. Dies hat zur Folge, dass die Fehlereinheit 1218a einen Sendevorgang abbricht. Wenn Frames gerade empfangen werden, dann sorgt die Fehlereinheit 1218a dafür, dass Kein-Acknowledge-Signal kAck zurückgesendet wird. Wenn bei den CRD-Summen Fehler auftauchen, dann kann dies von der Frame-Erkennungseinheit 1212 an die Fehlereinheit 1218 weitergeleitet werden.

Fig. 10 zeigt ein Blockschaltbild eines Teils einer CAN-Verteileinheit gemäß einem fünften Ausführungsbeispiel. Gemäß einem Ausführungsbeispiel der Erfindung ist eine Frame-Erkennungseinheit 1212, eine Baudraten-Erkennungseinheit 1214a, ein Baudraten-Generator 1214, eine Arbitrierungseinheit 1218 und eine Sendesteuereinheit 1219 vorgesehen. Ferner kann eine Fehlereinheit 1218a und eine LED-Steuereinheit 1218b vorgesehen sein.

## Patentansprüche

1. Windenergieanlage, mit
mindestens einer ersten elektrischen und/oder elektronischen Komponente (1001),
mindestens einer zweiten elektrischen und/oder elektronischen Komponente (1001),
einem Controller Area Network CAN-Kommunikationssystem (1000) zur Kommunikation zwischen der mindestens einen ersten und der mindestens einen zweiten elektrischen und/oder elektronischen Komponente (1001),
wobei das Controller Area Network CAN-Kommunikationssystem (1000) mindestens einen ersten und zweiten CAN-Knoten (1100), mindestens eine erste und zweite CAN-Verteileinheit (1200), mindestens einen ersten Kommunikationsabschnitt (1300) zur Kommunikation zwischen dem mindestens einen ersten oder zweiten CAN-Knoten (1100) und der mindestens einen ersten oder zweiten CAN-Verteileinheit (1200) und mindestens einen zweiten Kommunikationsabschnitt (1400) zur Kommunikation zwischen der mindestens einen ersten und zweiten CAN-Verteileinheit (1200) aufweist,
wobei die mindestens eine erste CAN-Verteileinheit (1200) über den ersten Kommunikationsabschnitt (1300) mit dem ersten CAN-Knoten (1100) und über den zweiten Kommunikationsabschnitt (1400) mit der zweiten CAN-Verteileinheit (1200) gekoppelt ist,
wobei die zweite CAN-Verteileinheit (1200) über den ersten Kommunikationsabschnitt (1300) mit dem zweiten CAN-Knoten (1100) gekoppelt ist,
wobei die erste elektrische und/oder elektronische Komponente (1001) mit dem ersten CAN-Knoten (1100) gekoppelt ist und wobei die zweite elektrische und/oder elektronische Komponente (1001) mit dem zweiten CAN-Knoten (1100) gekoppelt ist, um eine Kommunikation zwischen der ersten und zweiten elektrischen und/oder elektronischen Komponente (1001) zu ermöglichen,
wobei die mindestens eine erste und zweite CAN-Verteilereinheit (1200) dazu ausgestaltet ist, über den mindestens einen ersten Kommunikationsabschnitt (1300) eine Datenkommunikation mit dem mindestens einen ersten oder dem mindestens einen zweiten CAN-Knoten (1100) basierend auf einem ersten CAN Protokoll durchzuführen, welches ein Standard CAN Protokoll gemäß ISO 11898 darstellt,
wobei die mindestens eine erste und zweite CAN-Verteilereinheit (1200) dazu ausgestaltet ist, untereinander über den mindestens einen zweiten Kommunikationsabschnitt (1400) eine Datenkommunikation basierend auf einem zweiten CAN-Protokoll durchzuführen, welches von dem Standard CAN Protokoll abweicht,
wobei der mindestens eine zweite Kommunikationsabschnitt (1400) als optische Leitung ausgestaltet ist,
wobei der mindestens eine erste und der mindestens eine zweite Kommunikationsabschnitt (1200, 1400) jeweils als eine direkte Punkt-zu-Punkt Verbindung ausgestaltet ist.

2. Windenergieanlage nach Anspruch 1,
wobei die Länge des mindesten einen zweiten Kommunikationsabschnittes (1400) wesentlich größer ist als die Länge des mindesten einen ersten Kommunikationsabschnittes (1300).

3. Windenergieanlage nach einem der Ansprüche 1 bis 2, wobei
mindestens eine erste und eine zweite CAN-Verteileinheit (1200) jeweils eine CAN-Schnittstelle (1210) zur Kommunikation mit dem mindestens einen ersten oder zweiten CAN-Knoten (1100) aufweisen.

4. Windenergieanlage nach Anspruch 3, wobei
die CAN-Schnittstellen (1210) jeweils eine Frame-Erkennungseinheit (1212), eine Baudratenerkennungseinheit (1214a), einen Baudratengenerator (1214) und eine Arbitrierungseinheit (1218) aufweisen.

5. Verfahren zum Kommunizieren zwischen mindestens einer ersten elektrischen und/oder elektronischen Komponente (1001) und mindestens einer zweiten elektrischen und/oder elektronischen Komponente (1001) einer Windenergieanlage über ein Controller Area Network CAN-Kommunikationssystem (1000),
wobei das Controller Area Network CAN-Kommunikationssystem (1000) mindestens einen ersten und zweiten CAN-Knoten (1100), mindestens eine erste und zweite CAN-Verteileinheit (1200), mindestens einen ersten Kommunikationsabschnitt (1300) zur Kommunikation zwischen dem mindestens einen ersten oder zweiten CAN-Knoten (1100) und der mindestens einen ersten oder zweiten CAN-Verteileinheit (1200) und mindestens einen zweiten Kommunikationsabschnitt (1400) zur Kommunikation zwischen der mindestens einen ersten und zweiten CAN-Verteileinheit (1200) aufweist, mit den Schritten:
Koppeln der ersten CAN-Verteileinheit (1200) über den ersten Kommunikationsabschnitt (1300) mit dem ersten CAN-Knoten (1100) und
Koppeln der ersten CAN-Verteileinheit (1200) über einen zweiten Kommunikationsabschnitt (1400) mit der zweiten CAN-Verteileinheit (1200),
Koppeln der zweiten CAN-Verteileinheit (1200) über den ersten Kommunikationsabschnitt (1300) mit dem zweiten CAN-Knoten (1100),
Koppeln der ersten elektrischen und/oder elektronischen Komponente (1001) mit dem ersten CAN-Knoten (1100),
Koppeln der zweiten elektrischen und/oder elektronischen Komponente (1001) mit dem zweiten CAN-Knoten (1100), um eine Kommunikation zwischen der ersten und zweiten elektrischen und/oder elektronischen Komponente (1001) zu ermöglichen,
Kommunizieren der ersten CAN Verteilereinheit (1200) über den ersten Kommunikationsabschnitt (1300) mit dem ersten CAN Knoten (1100),
Kommunizieren der ersten CAN Verteilereinheit (1200) über den zweiten Kommunikationsabschnitt (1400) mit der zweiten CAN Verteilereinheit (1200),
Kommunizieren der zweiten CAN Verteilereinheit (1200) über den ersten Kommunikationsabschnitt (1300) mit dem zweiten CAN Knoten (1100),
wobei die Datenkommunikation über den ersten Kommunikationsabschnitt (1300) basierend auf einem ersten CAN Protokoll erfolgt, welches dem CAN Standard Protokoll entspricht, und
wobei die Datenkommunikation über den zweiten Kommunikationsabschnitt (1400) auf einem zweiten CAN Protokoll erfolgt, welches von dem Standard CAN Protokoll abweicht,
wobei zumindest der zweite Kommunikationsabschnitt (1400) als optische Leitung ausgestaltet ist,
wobei der erste und der zweite Kommunikationsabschnitt (1200, 1400) jeweils als eine direkte Punkt-zu-Punkt Verbindung ausgestaltet ist.

## Claims

1. Wind turbine, with
at least one first electrical and/or electronic component (1001),
at least one second electrical and/or electronic component (1001),
a Controller Area Network CAN communication system (1000) for communication between the at least one first and the at least one second electrical and/or electronic component (1001),
wherein the Controller Area Network CAN communication system (1000) comprises at least one first and second CAN node (1100), at least one first and second CAN distributor unit (1200), at least one first communication segment (1300) for communication between the at least one first or second CAN node (1100) and the at least one first or second CAN distributor unit (1200) and at least one second communication segment (1400) for communication between the at least one first and second CAN distributor unit (1200),
wherein the at least one first CAN distributor unit (1200) is coupled via the first communication segment (1300) with the first CAN node (1100) and via the second communication segment (1400) with the second CAN distributor unit (1200),
wherein the second CAN distributor unit (1200) is coupled via the first communication segment (1300) with the second CAN node (1100),
wherein the first electrical and/or electronic component (1001) is coupled with the first CAN node (1100) and wherein the second electrical and/or electronic component (1001) is coupled with the second CAN node (1100) to enable a communication between the first and second electrical and/or electronic component (1001),
wherein the at least one first and second CAN distributor unit (1200) is adapted to enable a data communication with the at least one first and the at least one second CAN node (1100) via the at least one first communication segment (1300) based on a first CAN protocol which corresponds to a standard CAN protocol according to ISO 11898,
wherein the at least one first and second CAN distributor unit (1200) are adapted to perform a data communication between themselves via the at least one second communication segment (1400) based on a second CAN protocol which deviates from the standard CAN protocol,
wherein the at least one second communication segment (1400) is embodied as an optical line,
wherein the at least one first and the at least one second communication segment (1200, 1400) are each designed as a point-to-point connection.

2. Wind turbine according to claim 1,
wherein the length of the at least one second communication segment (1400) is substantially greater than the length of the at least one first communication segment (1300).

3. Wind turbine according to one of the claims 1 to 2,
wherein at least one first and one second CAN distributor unit (1200) each comprises a CAN interface (1210) for communication with the at least one first or second CAN node (1100).

4. Wind turbine according to claim 3,
wherein each CAN interface (1210) has a frame detection unit (1212), a baud rate detection unit (1214a), a baud rate generator (1214) and an arbitration unit (1218).

5. Method of communication between at least one first electrical and/or electronic component (1001) and at least one second electrical and/or electronic component (1001) of a wind turbine via a Controller Area Network CAN communication system (1000),
wherein the Controller Area Network CAN communication system (1000) comprises at least one first and second CAN node (1100), at least one first and second CAN distributor unit (1200), at least one first communication segment (1300) for communication between the at least one first or second CAN node (1100) and the at least one first or second CAN distributor unit (1200) and at least one second communication segment (1400) for communication between the at least one first and second CAN distributor unit, comprising the steps of:
coupling the first CAN distributor unit (1200) via the first communication segment (1300) with the first CAN node (1100) and
coupling the first CAN distributor unit (1200) via the second communication segment (1400) with the second CAN distributor unit (1200),
coupling the second CAN distributor unit (1200) via the first communication segment (1300) with the second CAN node (1100),
coupling the first electrical and/or electronic component (1001) with the first CAN node (1100),
coupling the second electrical and/or electronic component (1001) with the second CAN node (1100) for enabling a communication between the first and second electrical and/or electronic component (1001),
communicating of the first CAN distributor unit (1200) via the first communication segment (1300) with the first CAN node (1100),
communicating of the first CAN distributor unit (1200) via the second communication segment (1400) with the second CAN distributor unit (1200),
communicating of the second CAN distributor unit (1200) via the first communication segment (1400) with the second CAN node (1100),
wherein the data communication via the first communication segment (1300) is based on a first CAN protocol which corresponds to the CAN standard protocol,
wherein the data communication via the second communication segment (1400) is based on a second CAN protocol which deviates from the standard CAN protocol,
wherein the second communication segment (1400) is designed as an optical line,
wherein the first and the second communication segment (1200, 1400) are each designed as a point-to-point connection.

## Revendications

1. Eolienne, avec
au moins un premier composant (1001) électrique et/ou électronique,
au moins un deuxième composant (1001) électrique et/ou électronique,
un système de communication CAN (Controller Area Network) (1000) pour la communication entre l'au moins un premier et l'au moins un deuxième composant (1001) électrique et/ou électronique,
dans lequel le système de communication CAN (Controller Area Network) (1000) présente au moins un premier et un deuxième nœud CAN (1100), au moins une première et une deuxième unité de répartition CAN (1200), au moins une première section de communication (1300) pour la communication entre l'au moins un premier ou deuxième nœud CAN (1100) et l'au moins une première ou deuxième unité de répartition CAN (1200), et au moins une deuxième section de communication (1400) pour la communication entre l'au moins une première et deuxième unité de répartition CAN (1200),
dans lequel l'au moins une première unité de répartition CAN (1200) est couplée au premier nœud CAN (1100) par l'intermédiaire de la première section de communication (1300) et à la deuxième unité de répartition CAN (1200) par l'intermédiaire de la deuxième section de communication (1400),
dans lequel la deuxième unité de répartition CAN (1200) est couplée au deuxième nœud CAN (1100) par l'intermédiaire de la première section de communication (1300),
dans lequel le premier composant (1001) électrique et/ou électronique est couplé au premier nœud CAN (1100) et dans lequel le deuxième composant (1001) électrique et/ou électronique est couplé au deuxième nœud CAN (1100) pour permettre une communication entre le premier et le deuxième composant (1001) électrique et/ou électronique,
dans lequel l'au moins une première et deuxième unité de répartition CAN (1200) sont configurées pour mettre en œuvre par l'intermédiaire de l'au moins une première section de communication (1300) une communication de données avec l'au moins un premier ou l'au moins un deuxième nœud CAN (1100) sur la base d'un premier protocole CAN, lequel constitue un protocole CAN standard selon la norme ISO 11898,
dans lequel l'au moins une première et deuxième unité de répartition CAN (1200) sont configurées pour mettre en œuvre entre elles par l'intermédiaire de l'au moins une deuxième section de communication (1400) une communication de données sur la base d'un deuxième protocole CAN, lequel diffère du protocole CAN standard,
dans lequel l'au moins une deuxième section de communication (1400) est configurée en tant que câble optique,
dans lequel l'au moins une première et l'au moins une deuxième section de communication (1200, 1400) sont configurées respectivement en tant qu'une connexion directe point à point.

2. Eolienne selon la revendication 1,
dans laquelle la longueur de l'au moins une deuxième section de communication (1400) est sensiblement plus grande que la longueur de l'au moins une première section de communication (1300).

3. Eolienne selon l'une quelconque des revendications 1 à 2, dans laquelle
au moins une première et une deuxième unité de répartition CAN (1200) présentent respectivement une interface CAN (1210) pour la communication avec l'au moins un premier ou deuxième nœud CAN (1100).

4. Eolienne selon la revendication 3, dans laquelle
les interfaces CAN (1210) présentent respectivement une unité de reconnaissance de trame (1212), une unité de reconnaissance de débits en bauds (1214a), un générateur de débits en bauds (1214) et une unité d'arbitrage (1218).

5. Procédé de communication entre au moins un premier composant (1001) électrique et/ou électronique et au moins un deuxième composant (1001) électrique et/ou électronique d'une éolienne par l'intermédiaire d'un système de communication CAN (Controller Area Network) (1000),
dans lequel le système de communication CAN (Controller Area Network) (1000) présente au moins un premier et un deuxième nœud CAN (1100), au moins une première et une deuxième unité de répartition CAN (1200), au moins une première section de communication (1300) pour la communication entre l'au moins un premier ou deuxième nœud CAN (1100) et l'au moins une première ou deuxième unité de répartition CAN (1200), et au moins une deuxième section de communication (1400) pour la communication entre l'au moins une première et deuxième unité de répartition CAN (1200), avec les étapes de :
couplage de la première unité de répartition CAN (1200) au premier nœud CAN (1100) par l'intermédiaire de la première section de communication (1300), et
couplage de la première unité de répartition (1200) à la deuxième unité de répartition CAN (1200) par l'intermédiaire d'une deuxième section de communication (1400),
couplage de la deuxième unité de répartition CAN (1200) au deuxième nœud CAN (1100) par l'intermédiaire de la première section de communication (1300),
couplage du premier composant (1001) électrique et/ou électronique au premier nœud CAN (1100),
couplage du deuxième composant (1001) électrique et/ou électronique au deuxième nœud CAN (1100) pour permettre une communication entre le premier et le deuxième composant (1001) électrique et/ou électronique,
communication de la première unité de répartition CAN (1200) avec le premier nœud CAN (1100) par l'intermédiaire de la première section de communication (1300),
communication de la première unité de répartition CAN (1200) avec la deuxième unité de répartition CAN (1200) par l'intermédiaire de la deuxième section de communication (1400),
communication de la deuxième unité de répartition CAN (1200) avec le deuxième nœud CAN (1100) par l'intermédiaire de la première section de communication (1300),
dans lequel la communication de données par l'intermédiaire de la première section de communication (1300) a lieu sur la base d'un premier protocole CAN, lequel correspond au protocole standard CAN, et
dans lequel la communication de données par l'intermédiaire de la deuxième section de communication (1400) a lieu sur un deuxième protocole CAN, lequel est différent du protocole CAN standard,
dans lequel au moins la deuxième section de communication (1400) est configurée en tant que câble optique,
dans lequel la première et la deuxième section de communication (1200, 1400) sont configurées respectivement en tant qu'une connexion directe point à point.
